# EUROPÄISCHE PATENTSCHRIFT

(11) **EP 2 319 162 B1**
(45) Veröffentlichungstag und Bekanntmachung des Hinweises auf die Patenterteilung: **11.10.2017**
(21) Anmeldenummer: 09782130.0
(22) Anmeldetag: 25.08.2009
(51) Int. Cl.: H02K 9/28, H01R 39/48

(54) **ELEKTRISCHE MASCHINE**
ELECTRICAL MACHINE
MACHINE ÉLECTRIQUE

(30) Priorität: 28.08.2008 DE 102008041650
(43) Veröffentlichungstag der Anmeldung: 11.05.2011
(73) Patentinhaber: Robert Bosch GmbH, 70442 Stuttgart (DE)
(72) Erfinder: SCHURIG, Dieter, 65510 Wallrabenstein (DE); DIKMENLI, Erdogan, 71636 Ludwigsburg (DE)
(86) Internationale Anmeldenummer: PCT/EP2009/060893
(87) Internationale Veröffentlichungsnummer: WO 2010/023190

(56) Entgegenhaltungen:
- WO-A-03/079517
- DE-A1- 19 820 885
- GB-A- 549 805

## Beschreibung

### Stand der Technik

Aus der deutschen Offenlegungsschrift DE 19705228 A1 ist ein Drehstromgenerator bekannt, der eine Anordnung aus Rotor und Stator aufweist, wobei der Rotor mit seiner Erregerspule mittels einer Schleifringanordnung am rechten Ende der Welle bestrombar ist. Auf dieser Schleifringanordnung gleiten Kohlebürsten. Zum Schutz vor äußeren Umgebungseinflüssen ist diese Schleifringbaugruppe mittels einer Einpasshülse vor eindringendem Wasser (bspw. Motorreinigung des Kraftfahrzeugs mittels Hochdruckreiniger) geschützt. Andererseits ist erwünscht, dass Abrieb der Kohlebürsten, welcher im Betrieb zwangsläufig auftritt, aus dieser Einpasshülse entfernt wird.
Aus der US 5,625,244 ist eine Anordnung bekannt, die mittels einem der Lüfter, welche die Ständerwicklungen kühlen, einen Luftzug durch eine entsprechende Einpasshülse erzeugen. Nachteilig ist hierbei, dass der Wirkungsgrad nur unbefriedigend ist, und zudem in den Lagerabschnitt eingebrachte Längsschlitze die Lagerung der gesamten elektrischen Maschine beeinflussen.

Weiterer Stand der Technik ist GB 549,805 sowie DE198 20 885 A1. Es besteht daher die Aufgabe, eine technische Lösung zur Zwangsentlüftung eines Raumes zu schaffen, indem Kohleabrieb entsteht.

### Vorteile der Erfindung

Die Erfindung gemäß den Merkmalen des Hauptanspruchs hat den Vorteil, dass sich durch das Anordnen eines Lüfters in der Einpasshülse eine besonders effektive Erzeugung eines Luftstroms beziehungsweise Spülluftstroms in der Einpasshülse ergibt. Die Einpasshülse weist eine Öffnung auf, die einen Eintritt für Spülluft ermöglicht und Austrittsöffnungen für Spülluft. Die Austrittsöffnungen dienen dazu vom Lüfter geförderte Luft rauszulassen, wobei die Austrittsöffnungen entweder radial außerhalb des Lüfters oder zum Lüfter axial versetzt angeordnet sind. Mit Hilfe dieses besonders intensiven Spülluftstroms, ist es möglich den Schleifstaub der Kohlebürsten besonders effektiv aus dem Schleifringraum zu entfernen. Neben dem Wegtransport des Kohlestaubs bzw. Schleifstaubs wird mit diesem System eine Temperaturreduzierung im Schleifringraum erzielt. Mit dieser Temperaturreduzierung von etwa 10°C kann die Lebensdauer der Bürsten um über 10% erhöht werden.

Vorteilhafte Ausbildungen der Erfindung ergeben sich aus den Unteransprüchen. Durch das Anordnen vom Lüfterschaufeln, die auf einer Lüfterplatte des Lüfters abstehen, ergibt sich die Möglichkeit einen Lüfter zu gestalten, dessen Belastung gegen Fliehkräfte durch die Lüfter ganz besonders im Nabenbereich im erträglichen Maße ist. Ist axial gegenüber den freien Enden der Lüfterschaufeln ein Plattenbereieh angeordnet, der Teil der Einpasshülse ist, so verbessert dies den Lüfterwirkungsgrad erheblich. Hat der Lüfter einen Außendurchmesser, der kleiner als der größte Durchmesser eines in der Einpasshülse angeordneten Wälzlagers ist, so ergibt sich eine verhältnismäßig einfache Gestaltung der Einpasshülse, da sich dadurch der Einsatz von so genannten Querschiebern bei der gusstechnischen Herstellung der Einpasshülse an dieser Stelle vermeiden lässt. Es ist vorgesehen, dass der Lüfter durch einen Wellenabschnitt und/oder durch einen Abschnitt eines Isolators zentriert wird, wobei der Isolator den zumindest einen rotorfesten Gegenkontakt trägt. Diese Anordnung ermöglicht eine einfache Zentrierung des Lüfters auf der Rotorwelle. Um den Lüfter ganz besonders in dessen Nabenbereich nicht zu massiv ausführen zu müssen, ist vorgesehen, dass an einem radialen Innenrand des Lüfters ein Hülsenabschnitt angeformt ist, der auf dem Isolator anliegt.

Gemäß einer weiteren Ausgestaltung der Erfindung ist vorgesehen, dass der Lüfter mit seiner Lüfterplatte das Wälzlager gegen Verschmutzung abschirmt. Die Öffnung für den Eintritt der Spülluft kann beispielsweise in einem Seitenbereich der Einpasshülse oder Stirnbereich oder Übergangsbereich zwischen Seiten und Stirnbereich (vom Wälzlager abgewandtes Ende der Einpasshülse) angeordnet sein. Des Weiteren kann diese Öffnung auch ein Spalt sein, der sich in einer Öffnung der Einpasshülse ergibt, indem in diese Öffnung der Köcher des Bürstenhalters eingesetzt ist und dieser Spalt einen Luftzug ermöglicht. Zur Vermeidung von Schlupf zwischen dem Lüfter und der Rotorwelle ist vorgesehen, diesen Lüfter mittels einer stoffschlüssigen (Kleben, Reibschweißen) oder formschlüssigen oder kraftschlüssigen Verbindung auf dem Rotor zu sichern.

### Beschreibung

Kurze Beschreibung der Figuren:
Figur 1 zeigt einen Längsschnitt durch eine elektrische Maschine hier in der Bauart als Wechselstromgenerator,
Figur 2 zeigt einen Längsschnitt durch den Schleifringraum (erstes Ausführurigsbeispiel),
Figur 3 zeigt einen Teillängsschnitt durch ein Einpasslabyrinth mit eingesetzten Bürstenköcher,
Figur 4 zeigt in einer Längsschnittansicht ein zweites Ausführungsbeispiel,
Figur 5a zeigt in einer Teilschnittansicht die Einpasshülse des zweiten Ausführungsbeispiels,
Figur 5b zeigt schematisch eine Abdeckung des offenen Endes der Einpasshülse durch einen Bereich der Schutzkappe,
Figur 6 zeigt eine räumliche Ansicht in die Einpasshülse aus Figur 5 mit verschiedenen darin angeordneten Bauteilen.

### Offenbarung der Erfindung

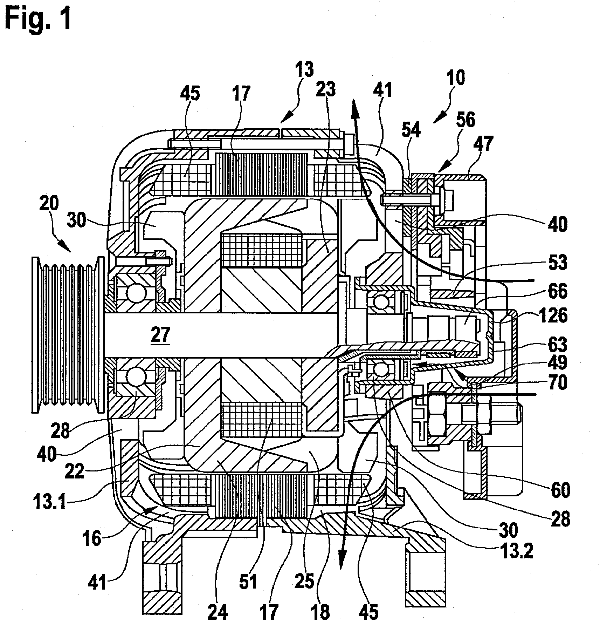

In Figur 1 ist ein Querschnitt durch eine elektrische Maschine 10, hier in der Ausführung als Generator bzw. Wechselstromgenerator für Kraftfahrzeuge, dargestellt. Diese elektrische Maschine 10 weist u.a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u.a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 dargestellte Öffnungen 41.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt eine Platte 54. Am Kühlkörper 53 ist eine Anschlussplatte 56 angeordnet, die dazu dient, in der Platte 54 angeordnete Minusdioden und hier in dieser Darstellung nicht gezeigte Plusdioden im Kühlkörper 53 miteinander zu verbinden und somit eine an sich bekannte Brückenschaltung darzustellen.

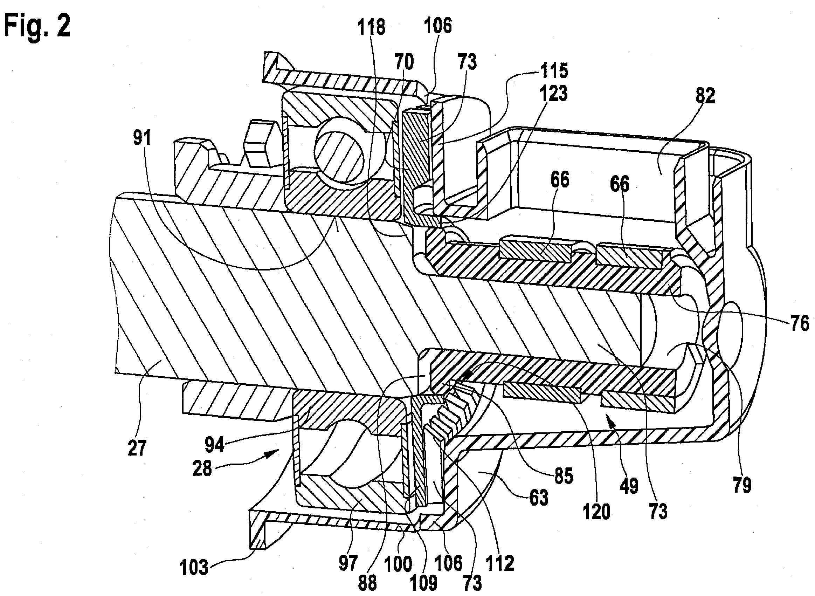

Im Lagerschild 13.2 befindet sich an dessen radialer Innenseite eine Nabe 60, die einen zylindrischen Innenumfang und damit eine Bohrung aufweist. In dieser Bohrung sitzt eine so genannte Einpasshülse 63, die die Aufgabe hat das so genannte bürstenseitige Wälzlager 28 in sich aufzunehmen. Details hierzu werden in der Figur 2 näher erläutert werden. Diese Einpasshülse hat nicht nur diesen eigentlichen Einpassring-Abschnitt, der direkt in der Nabe 60 sitzt sondern auch noch einstückig an diesen Einpassring-Abschnitt angeformt eine hülsenförmige Kappe, die am Rotor 20 befestigte und damit rotorfeste Gegenkontakte 66, die hier Schleifringe sind, umgibt. Auf diesem rotorfesten Gegenkontakt 66 leitet ein hier nicht dargestellter Gleitkontakt, der üblicherweise auch als Bürste bezeichnet wird. In dieser Einpasshülse 63 ist des Weiteren ein Lüfter 70 angeordnet, der sich in der Einpasshülse 63 befindende Spülluft antreibt und so das Hinausbefördern von Schleifstaub, der durch Abnutzung der Gleitkontakte entsteht, aus dem Innenraum der Einpasshülse 63 zu befördern.

Es ist demzufolge eine elektrische Maschine 10 gezeigt, insbesondere ein Wechselstromgenerator, mit einem Stator 16 und einem Rotor 20, wobei der Rotor 20 eine Leiteranordnung hier in Gestalt einer Erregerwicklung 51 zur Erregung eines elektromagnetischen Feldes im Rotor trägt, mit einer Einrichtung zur Übertragung elektrischer Energie an die Leiteranordnung, wobei die Einrichtung zur Übertragung elektrischer Energie zumindest einen Gleitkontakt in Gestalt einer Bürste (Graphit-, Kohlebürste) und zumindest einen rotorfesten Gegenkontakt umfasst. Der rotorfeste Gegenkontakt ist im genannten Ausführungsbeispiel als Schleifring ausgeführt. Eine andere Ausführungsweise kann beispielsweise bei einer Gleichstrommaschine als Kommutator mit am Umfang verteilten Lamellen ausgeführt sein. Des Weiteren weist die elektrische Maschine 10 eine Einpasshülse 63 auf, in der vorzugsweise das erwähnte Wälzlager 28 zur Stützung einer Welle 27 angeordnet ist, die den zumindest einen rotorfesten Gegenkontakt 66 größtenteils umhüllt. Es ist vorgesehen, dass in der Einpasshülse 63 ein Lüfter 70 angeordnet ist.

In Figur 2 ist ein Längsschnitt durch die Schleifring-Baugruppe dargestellt. Es ist auch dargestellt, wie diese Schleifring-Baugruppe und auch das Wälzlager 28 von der Einpasshülse 63 umgeben sind. Die Welle 27 weist an ihrem vom elektromagnetischen Teil des Rotors 20 wegweisenden Ende einen Zapfen 73 auf, auf dem ein Kontaktabschnitt 76 der Schleifring-Baugruppe 49 angeordnet ist. Dieser Kontaktabschnitt 76 weist eine zentrale Bohrung 79 auf, die auf den Zapfen 73 zumindest kraftschlüssig sitzt. Der Kontaktabschnitt 76 hält mit seinem isolierenden Kunststoffmaterial zwei rotorfeste Gegenkontakte 66, die sich radial unterhalb einer Öffnung 82 befinden. Diese Öffnung 82 ist im Einpassring 63 eingebracht und dient dazu, eine hier nicht dargestellten Köcher eines Bürstenhalters aufzunehmen, damit entsprechende Gleitkontakte, welche im Bürstenhalter beziehungsweise dessen Köcher angeordnet sind, Kontakt mit den Gegenkontakten 66 aufnehmen können. Von den hier dargestellten Gegenkontakten 66 geht von deren radialem Innenumfang jeweils ein elektrischer Leiter aus, der nach links innerhalb des Isolatormaterials und unterhalb des Wälzlagers, das heißt radial innerhalb des Innenrings des Wälzlagers, nach links geführt ist. Der Kontaktabschnitt 76 ist mit einem in der Figur 2 nach links zum elektromagnetischen Teil des Rotors 20 orientierten Bundabschnitt 85 in Richtung zu einer Anlagefläche 88 der Welle 27 orientiert und kann dort anliegen.

An die Anlagefläche 88 schließt sich in von den Schleifringen 66 abweisender Richtung ein Wellenabschnitt an, der als Sitz 91 für das Wälzlager 28 gestaltet ist. Das Wälzlager 28 sitzt mit seinem Innenring 94 auf dem Sitz 91; sein Außenring 97 stützt sich auf dem Einpassring-Abschnitt 100 nach radial außen und in der Nabe 60 ab. Der Einpassring-Abschnitt 100 liegt mittels eines Bundes 103 am Lagerschild 13.2, siehe auch Figur 1, von der Innenseite des Lagerschildes 13.2 an. Zwischen dem Lager 28 und dem Kontaktabschnitt 76 ist der Lüfter 70 mit seinen Lüfterschaufeln angeordnet. Radial, ggf. auch leicht axial versetzt, außerhalb des Lüfters 70 sind in der Einpasshülse 63 Öffnungen 106 angeordnet, die sich an dieser Stelle über den ganzen Umfang der Einpasshülse 63 verteilen. Der Lüfter 70 verteilt mit seinen Lüfterschaufeln 73 Luft, die er aus dem Innenraum der Einpasshülse 63 gefördert hat, durch diese Öffnungen 106 nach bzw. im wesentlichen nahezu radial außen und entfernt so abgeriebenen Staub. Die Lüfterschaufeln 73 stehen von einer Lüfterplatte 109 ab. Axial gegenüber freien Enden 112 der Lüfterschaufeln 73 ist ein Plattenbereich 115 angeordnet, der Teil der Einpasshülse 63 ist. Durch diese Anordnung verbessert sich der Lüfterwirkungsgrad erheblich.

Der Lüfter 70 hat einen Außendurchmesser, der kleiner als der größte Durchmesser des in der Einpasshülse 63 angeordneten Wälzlagers 28. Der Lüfter 70 schirmt mit seiner Lüfterplatte 109 das Wälzlager 28 gegen Verschmutzung ab.

Der Lüfter 70 ist gemäß Figur 2 durch einen Wellenabschnitt 118 und durch einen Abschnitt des Isolators - nämlich des Bundabschnitts 85 - und hier auf dessen radialer Außenseite zentriert. Der Isolator ist hier der Kunststoffanteil beziehungsweise Kunststoffbereich des Kontaktabschnitts 76. Alternativ könnte der Lüfter 70 auch entweder nur durch den Wellenabschnitt 118 oder nur durch den Bundabschnitt 85 des Isolators zentriert sein.

Am Lüfter 70 ist an dessen radialem Innenrand 120 ein Hülsenabschnitt 123 angeformt, der auf dem Isolator, das heißt dem Isolationsmaterial des Kontaktabschnitts 76 anliegt.

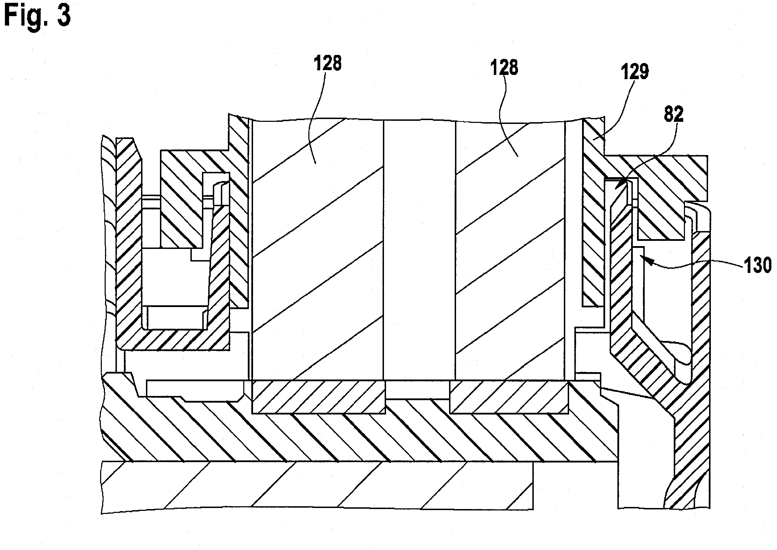

Die Einpasshülse 63 weist eine bereits in Figur 1 dargestellte Öffnung 126 auf, die einen Eintritt für Spülluft ermöglicht. In der Figur 2 ist alternativ die Öffnung 82 als Öffnung vorgesehen, die einen Eintritt für Spülluft ermöglicht. In diese Öffnung 82 wird vorzugsweise der Köcher 129 eines Bürstenhalters eingesetzt, wobei zwischen dem Köcher und der Öffnung 82 ein Spalt ist, der einen Eintritt für Spülluft ermöglicht. Der Köcher hat in der Figur 3 die Bezugszahl 129. Die Bürsten 128 ragen in die Öffnung 82 hinein. Es ist vorgesehen, dass der Lüfter 70 mittels einer stoffschlüssigen, formschlüssigen oder kraftschlüssigen Verbindung auf dem Rotor gesichert ist.

Es ist vorgesehen, dass der Lüfter 70 zum Wälzlager 28 einen bestimmten Abstand einhält. Dies ist wichtig, um eventuell eingedrungene Flüssigkeit durch den Schleudereffekt aus dem Zwischenraum zu entfernen. Ist der Abstand zu gering, kann die Flüssigkeit zum Kugellager und Lüfter durch Kapillareffekt nicht oder nur schwer entfernt werden. Geeignete Abstände zwischen dem Kugellager 28 und dem als Schleuderscheibe arbeitenden Lüfter 70 liegen bei > 0,3 mm. Der Abstand des äußeren Schaufeldurchmessers ist so zu dimensionieren, dass ein Optimum an Luftstrom mit gleichzeitig geringem Abstand zum Innendurchmesser des Einpassrings 63 besteht. Dies verändert ein Eindringen von Flüssigkeit bei sich drehenden Generatoren. Typische Abstände zwischen Aussendruchmesser, Lüfter und Innendurchmesser-Kapselung liegen zwischen 1 und 2mm. Der Lüfter hat die Aufgabe einen permanenten Unterdruck im Schleifringraum zu erzeugen. Kühlere Luft wird durch das Regler-Einpassring-Labyrinth (Spalt 130) angesaugt, kühlt gezielt die Schleifringe und verlässt den Schleifringraum an den Öffnungen des Einpassrings. Diese Austrittsöffnung sind parallel zum Lüfter-Außendurchmesser angebracht, um eventuell eingedrungene Flüssigkeit durch den Schleudereffekt sofort wieder aus der Kapselung zu entfernen. Die Anzahl der Schaufeln ist so zu wählen, dass ein möglichst hoher Strömungsdurchfluss gewährleistet ist. Eine typische Anzahl der Schaufeln liegt zwischen 6 und 30. Die Löcher am Einpassring sind umlaufend, das heißt über den gesamten Umfang von 360° angeordnet. Damit ist ein Ablauf von eingedrungener Flüssigkeit bei allen Einbaulagen gewährleistet. Zusätzlich sind diese Öffnungen am größten Außendurchmesser vom Einpassring anzubringen. Damit wird ein vollständiges Ablaufen von Flüssigkeiten garantiert.

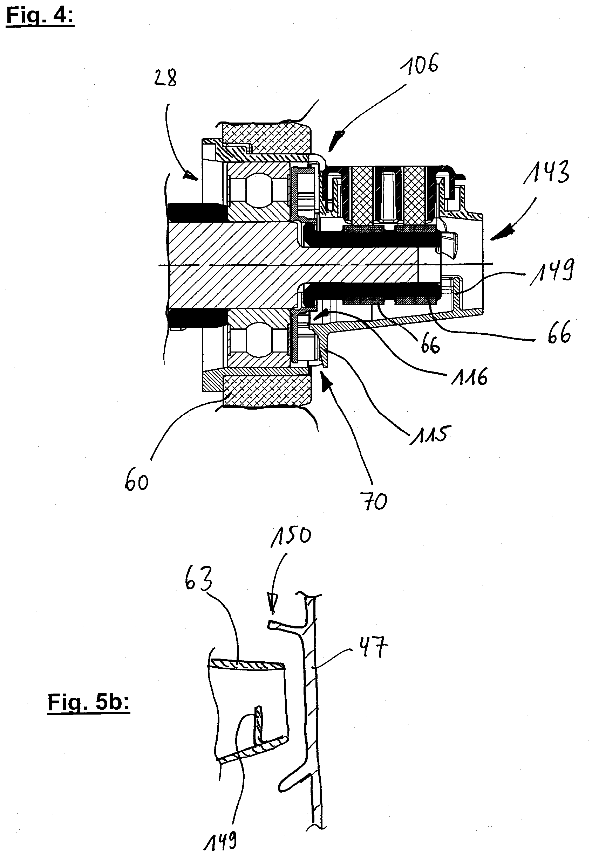

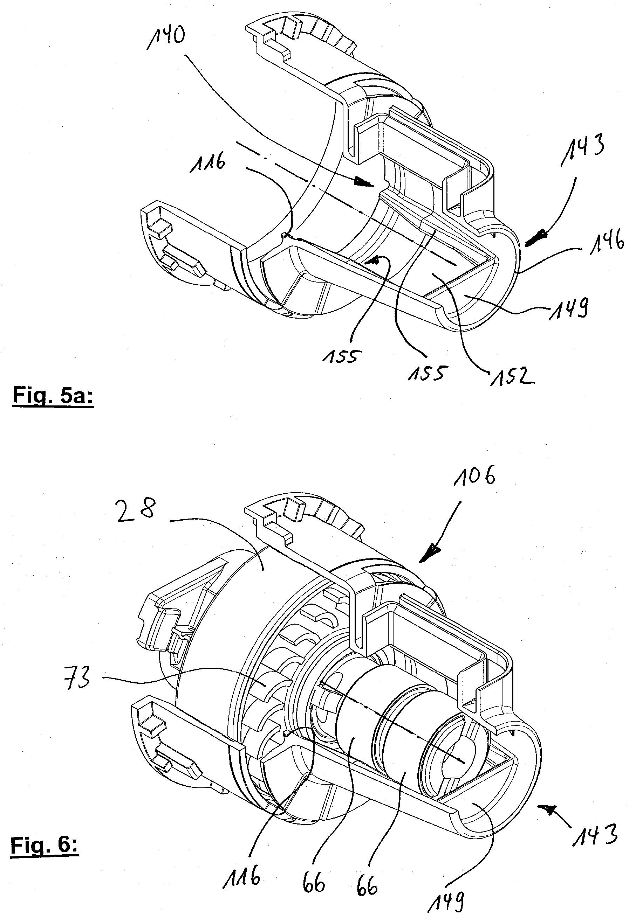

Wie die Figur 4 in einem zweiten Ausführungsbeispiel zeigt, kann der Plattenbereich 115 alternativ auch mit einem größeren Abstand zu den Lüfterschaufeln 73 angeordnet sein (größer als im ersten Ausführungsbeispiel). Zur Erzielung eines hohen Lüfterwirkungsgrades ist vorzugsweise bei einem derartigen Abstand vorgesehen, dass die Einpasshülse 63 mit einem zum Wälzlager 28 gerichteten, rohrstutzenartigen Ende 116 der hülsenförmigen Kappe axial näher an die Lüfterschaufeln 73 reicht, als der Plattenbereich 115 axial von den Lüfterschaufeln 73 beabstandet ist. Es ist vorgesehen, dass die Einpasshülse 63 Austrittsöffnungen 106 für Spülluft aufweist, die dazu dienen, vom Lüfter 70 geförderte Luft auszulassen, wobei die Austrittsöffnungen 106 entweder radial außerhalb des Lüfters 70 oder zum Lüfter 70 axial versetzt angeordnet sind. Das rohrstutzenartige Ende 116 erschwert bspw. im Ruhezustand der elektrischen Maschine das Eindringen von Flüssigkeiten durch die Austrittsöffnungen 106. Das rohrstutzenartige Ende 106 kann sowohl durchgehend ringförmig gestaltet als auch an einigen wenigen Stellen unterbrochen sein, siehe bspw. auch Figur 5. Dort ist eine Unterbrechung 140 dargestellt.

Figur 5a zeigt darüber hinaus eine Einpasshülse 63 deren vom Wälzlager 28 abgewandtes Ende der Kappe mit einer Lufteinlassöffnung 143 ausgestattet ist. Die dort rohrartig rund ausgeführte Einpasshülse 63 weist etwas nach dem Ende 146 der Einpasshülse 63 - d. h. vom Ende 146 etwas zurückversetzt - einen barriereartigen Steg 149 auf. Dieser Steg 149 an sich bewirkt einerseits eine Behinderung für potentiell eindringende Flüssigkeiten. Ganz besonders in Zusammenwirkung mit einer Schutzkappe 47, siehe auch Figur 1, die mit einem napf- oder topfartigen Kappenbereich 150 mit Spalt über der Lufteinlassöffnung 143 angeordnet ist, siehe Figur 5b, wird einerseits der Zutritt für Flüssigkeiten erschwert und gleichzeitig eine gute Belüftung der Einpasshülse 63 möglich. An einer Innenwand 152 der Einpasshülse 63 entlang erstrecken sich zwei Stege 155. Diese zwei Stege 155 haben die Funktion eines Wasserabscheiders. Wird durch die Lufteinlassöffnung 143 doch einmal Wasser oder eine andere Flüssigkeit angesaugt oder hineingespritzt, so wird beispielsweise der Oberflächenabschnitt der Innenwand 152 benetzt, der oberhalb des Stegs 149 angeordnet ist. Des Weiteren wird beispielsweise auch die Schleifringbaugruppe 49 benetzt und durch ggf. vorhandene Drehung der Schleifringbaugruppe 49 Wasser wieder weggeschleudert. Die Stege 155 dienen dazu, Wasser zu sammeln (kanalisieren) bzw. an diesen Stegen 155 Tropfen bilden zu lassen, die dadurch leichter und verstärkt in Richtung zum Lüfter 70 mit der Strömung weggerissen bzw. abgeleitet werden können. Die Verweildauer der Flüssigkeit in der Einpasshülse 63 wird dadurch verringert.

## Patentansprüche

1. Elektrische Maschine, insbesondere Wechselstromgenerator, mit einem Stator (16) und einem Rotor (20), wobei der Rotor (20) eine Leiteranordnung zur Erregung eines elektromagnetischen Feldes trägt, mit einer Einrichtung zur Übertragung elektrischer Energie an die Leiteranordnung, wobei die Einrichtung zur Übertragung elektrischer Energie zumindest einen Gleitkontakt und zumindest eine rotorfesten Gegenkontakt (66) umfasst, mit einer Einpasshülse (63), in der ein Wälzlager (28) zur Stützung einer Welle (27) angeordnet ist, die den zumindest einen rotorfesten Gegenkontakt (66) größtenteils umhüllt, **dadurch gekennzeichnet, dass** in der Einpasshülse (63) ein Lüfter (70) angeordnet ist und die Einpasshülse (63) eine Öffnung (82, 126) aufweist, die einen Eintritt für Spülluft ermöglicht und die Einpasshülse (63) Austrittsöffnungen (106) für Spülluft aufweist, die dazu dienen, vom Lüfter (70) geförderte Luft rauszulassen, wobei die Austrittsöffnungen (106) entweder radial außerhalb des Lüfters (70) oder zum Lüfter (70) axial versetzt angeordnet sind.

2. Elektrische Maschine nach Anspruch 1, **dadurch gekennzeichnet, dass** der Lüfter (70) auf einer Lüfterplatte (109) von dieser abstehende Lüfterschaufeln (73) aufweist.

3. Elektrische Maschine nach Anspruch 2, **dadurch gekennzeichnet, dass** axial gegenüber freien Enden (112) der Lüfterschaufeln (73) ein Plattenbereich (115) angeordnet ist, der Teil der Einpasshülse (63) ist.

4. Elektrische Maschine nach Anspruch 1, **dadurch gekennzeichnet, dass** die Einpasshülse (63) mit einem zum Wälzlager (28) gerichteten, rohrstutzenartigen Ende (116) der hülsenförmigen Kappe axial näher an die Lüfterschaufeln (73) reicht als der Plattenbereich (115) axial von den Lüfterschaufeln (73) beabstandet ist.

5. Elektrische Maschine nach einem der Ansprüche 1 bis 4, **dadurch gekennzeichnet, dass** der Lüfter (70) einen Außendurchmesser aufweist, der kleiner als der größte Durchmesser eines in der Einpasshülse (63) angeordneten Wälzlagers (28) ist.

6. Elektrische Maschine nach einem der vorstehenden Ansprüche, **dadurch gekennzeichnet, dass** der Lüfter durch einen Wellenabschnitt (118) und/oder durch einen Abschnitt eines Isolators zentriert wird, wobei der Isolator den zumindest einen rotorfesten Gegenkontakt (66) trägt.

7. Elektrische Maschine nach Anspruch 6, **dadurch gekennzeichnet, dass** an einem radialen Innenrand des Lüfters (70) ein Hülsenabschnitt (123) angeformt ist, der auf dem Isolator anliegt.

8. Elektrisch Maschine nach einem der vorstehenden Ansprüche, **dadurch gekennzeichnet, dass** der Lüfter (70) mit einer Lüfterplatte (109) ein Wälzlager (28) gegen Verschmutzung abschirmt.

9. Elektrische Maschine nach einem der vorstehenden Ansprüche, **dadurch gekennzeichnet, dass** die Einpasshülse (63) eine Öffnung (82, 126) aufweist, die einen Eintritt für Spülluft ermöglicht, in die vorzugsweise ein Köcher (129) eines Bürstenhalters ragt, wobei zwischen dem Köcher (129) und der Öffnung (82) ein Spalt (130) ist, der einen Eintritt für Spülluft ermöglicht.

10. Elektrische Maschine nach einem der vorstehenden Ansprüche, **dadurch gekennzeichnet, dass** der Lüfter (70) mittels eines stoffschlüssigen, formschlüssigen oder kraftschlüssigen Verbindung auf dem Rotor (20) gesichert ist.

## Claims

1. Electrical machine, in particular AC generator, with a stator (16) and a rotor (20), the rotor (20) bearing a conductor arrangement for exciting an electromagnetic field, with a device for transmitting electrical energy to the conductor arrangement, the device for transmitting electrical energy comprising at least one sliding contact and at least one mating contact (66) fixed to the rotor, with a fitting sleeve (63), in which a roller bearing (28) for supporting a shaft (27) is arranged, said fitting sleeve enveloping a large proportion of the at least one mating contact (66) fixed to the rotor, **characterized in that** a fan (70) is arranged in the fitting sleeve (63) and the fitting sleeve (63) has an opening (82, 126), which makes it possible for flushing air to enter and the fitting sleeve (63) has outlet openings (106) for flushing air which serve the purpose of letting out air which has been delivered from the fan (70), the outlet openings (106) being arranged either radially outside the fan (70) or axially offset with respect to the fan (70).

2. Electrical machine according to Claim 1, **characterized in that** the fan (70) has, on a fan plate (109), fan blades (73) protruding from said fan plate.

3. Electrical machine according to Claim 2, **characterized in that** a plate region (115), which is part of the fitting sleeve (63), is arranged axially opposite free ends (112) of the fan blades (73).

4. Electrical machine according to Claim 1, **characterized in that** the fitting sleeve (63) with an end (116) of the sleeve-shaped cap, said end being in the form of a pipe connector and being directed toward the roller bearing (28), reaches axially closer to the fan blades (73) than the axial distance between the plate region (115) and the fan blades (73).

5. Electrical machine according to one of Claims 1 to 4, **characterized in that** the fan (70) has an outer diameter which is less than the greatest diameter of a roller bearing (28) arranged in the fitting sleeve (63).

6. Electrical machine according to one of the preceding claims, **characterized in that** the fan is centered by a shaft section (118) and/or by a section of an insulator, the insulating bearing the at least one mating contact (66) fixed to the rotor.

7. Electrical machine according to Claim 6, **characterized in that** a sleeve section (123) is integrally formed on a radial inner edge of the fan (70) and bears against the insulator.

8. Electrical machine according to one of the preceding claims, **characterized in that** the fan (70) with a fan plate (109) shields a roller bearing (28) from contamination.

9. Electrical machine according to one of the preceding claims, **characterized in that** the fitting sleeve (63) has an opening (82, 126), which makes it possible for flushing air to enter and into which a cartridge (129) of a brushholder preferably protrudes, wherein a gap (130) which enables flushing air to enter is between the cartridge (129) and the opening (82).

10. Electrical machine according to one of the preceding claims, **characterized in that** the fan (70) is secured on the rotor (20) by means of a cohesive, form-fitting or force-fitting connection.

## Revendications

1. Machine électrique, notamment générateur de courant alternatif, comprenant un stator (16) et un rotor (20), le rotor (20) comportant un arrangement de conducteurs servant à exciter un champ électromagnétique, comprenant un dispositif destiné à transmettre de l'énergie électrique à l'arrangement de conducteurs, le dispositif destiné à transmettre de l'énergie électrique comprenant au moins un contact glissant et au moins un contact homologue (66) en position fixe sur le rotor, comprenant une douille d'ajustage (63) dans laquelle est disposé un roulement (28) destiné à supporter un arbre (27), lequel enrobe en majeure partie l'au moins un contact homologue (66) en position fixe sur le rotor, **caractérisée en ce qu'**un ventilateur (70) est disposé dans la douille d'ajustage (63) et la douille d'ajustage (63) possède une ouverture (82, 126) qui permet une entrée pour de l'air de rinçage et la douille d'ajustage (63) possède des ouvertures de sortie (106) pour l'air de rinçage, lesquelles servent à laisser sortir l'air transporté par le ventilateur (70), les ouvertures de sortie (106) étant disposées soit radialement à l'extérieur du ventilateur (70), soit décalées axialement par rapport au ventilateur (70).

2. Machine électrique selon la revendication 1, **caractérisée en ce que** le ventilateur (70) possède sur une plaque de ventilateur (109) des pales de ventilateur (73) qui font saillie depuis celle-ci.

3. Machine électrique selon la revendication 2, **caractérisée en ce qu'**une zone de plaque (115) qui est une partie de la douille d'ajustage (63) est disposée dans le sens axial en face des extrémités libres (112) des pales de ventilateur (73).

4. Machine électrique selon la revendication 1, **caractérisée en ce que** la douille d'ajustage (63) se rapproche axialement des pales de ventilateur (73) par une extrémité (116) du chapeau en forme de douille de type embout de tube dirigée vers le roulement (28) à une distance plus courte par rapport à l'espacement axial entre la zone de plaque (115) et les pales de ventilateur (73).

5. Machine électrique selon l'une des revendications 1 à 4, **caractérisée en ce que** le ventilateur (70) présente un diamètre extérieur qui est plus petit que le plus grand diamètre d'un roulement (28) disposé dans la douille d'ajustage (63).

6. Machine électrique selon l'une des revendications précédentes, **caractérisée en ce que** le ventilateur est centré par une portion d'arbre (118) et/ou par une portion d'un isolateur, l'isolateur supportant l'au moins un contact homologue (66) en position fixe sur le rotor.

7. Machine électrique selon la revendication 6, **caractérisée en ce qu'**une portion de douille (123) est façonnée sur un bord intérieur radial du ventilateur (70), laquelle repose sur l'isolateur.

8. Machine électrique selon l'une des revendications précédentes, **caractérisée en ce que** le ventilateur (70), avec une plaque de ventilateur (109), protège un roulement (28) de l'encrassement.

9. Machine électrique selon l'une des revendications précédentes, **caractérisée en ce que** la douille d'ajustage (63) possède une ouverture (82, 126) qui permet une entrée pour de l'air de rinçage, dans laquelle fait saillie de préférence un étui (129) d'un porte-balais, une fente (130) qui permet l'entrée de l'air de rinçage étant présente entre l'étui (129) et l'ouverture (82).

10. Machine électrique selon l'une des revendications précédentes, **caractérisée en ce que** le ventilateur (70) est solidement fixé sur le rotor (20) au moyen d'une liaison par fusion de matières, par complémentarité de formes ou par force.
